# EUROPEAN PATENT SPECIFICATION

(11) **EP 1 229 193 B1**
(45) Date of publication and mention of the grant of the patent: **31.08.2005**
(21) Application number: 02250767.7
(22) Date of filing: 05.02.2002
(51) Int. Cl.: E05B 71/00, G07F 7/00

(54) **Controlled access systems**
Gesteuertes Zugangssystem
Système d'accès commandé

(30) Priority: 05.02.2001 GB 0102844
(43) Date of publication of application: 07.08.2002
(73) Proprietor: Hanning, Bernard William, Middlesex UB6 8HB (GB)
(72) Inventor: Hanning, Bernard William, Middlesex UB6 8HB (GB)
(74) Representative: Gallafent, Richard John

(56) References cited:
- DE-A- 4 301 039
- FR-A- 2 732 144
- US-A- 5 726 885
- US-A- 5 917 407

## Description

This invention relates to controlled access systems and, in particular, to systems allowing multiple access by users to movable items, for example bicycles.

In recent years, concern about transport congestion and the pollution caused by public transport has led to the development in a number of cities of bicycle availability schemes. The local authority or operating company charged with implementing such a scheme provides a plurality of bicycles which are designed to be locked to fixed docking stations when not in use. Release may be effected, for example, by incorporating an appropriate coin release mechanism in the docking station, thus providing pre-payment for each "hire". Such a system is, however, somewhat inflexible and, in particular, is highly insecure in the sense that the operating authority does not know who has taken a particular bicycle, nor for how long.

US-A-5917407 discloses an unattended automated bicycle rental station which enables access to a number of bicycles by users. It includes a plurality of spaced apart securing devices for the bicycles, each of which has a unique identifier associated with it. The bicycles may be physically locked to or released from the securing devices, and there is a monitoring and control system which can receive signals from a user of the system inserting a credit card or other card into the control system tower, whereby to release a bicycle. On return of the bicycle, the system can detect this and the user's credit card can then be billed appropriately. The system stations can communicate with a central control system via the PSTN.

The present invention seeks to provide an improved system enabling substantially more sophisticated monitoring and control as well as substantial flexibility of operation.

According to the present invention, a multiple access user system for providing intermittent availability to users of movable items, the system comprising:
a plurality of spaced apart item-securing devices, each such device comprising a unique identifier associated therewith, means to lock an item thereto and means to release an item locked thereto, and
a central monitoring and control system adapted to receive signals from a user via a communication channel and, in dependence on the signals received, transmit data enabling a selected one of the item-securing devices to be switched between the locked and unlocked conditions
is characterised in that the central monitoring and control system is adapted to receive signals via a mobile telephone system from individual mobile telephone units located with each user and to transmit to the user, via the mobile telephone system, the data enabling the user to unlock the item.

Preferably; the system also includes a unique item identifier associated with each item.

The plurality of spaced apart item-securing devices may be active or passive. By active is meant that the device has means associated with it for communicating with the central monitoring and control system, which, for example, may provide an indication of whether one of the movable items is or is not secured thereto and, if the item is provided with an identity which can be automatically detected by the securing device, details of which item is secured thereto out of the possible plurality. By passive is meant a securing device which does not have such communications capacity, but which functions simply in accordance with a pre-programmed sequence of instructions and the particular state of which can accordingly be determined by the central monitoring and control system monitoring the past activity carried out at the particular item-securing device.

In the case of an active item-securing device, the unique identifier associated with that item-securing device need not necessarily be identifiable to users of the system, but it is generally preferred that the unique identifier associated with each of the spaced apart item-securing devices is openly available. In the case of a passive item-securing device, it is necessary in order to operate the system that its unique identifier is available to the user.

The central monitoring and control system is preferably a computer controlled system operating automatically in accordance with a predetermined programme and not requiring any human intervention (though a human back-up in terms of operator assistance may be provided if desired, at least during normal working hours). Communication between the user and the system takes place via a mobile telephony system. Each user of the system may use a mobile telephone for communicating with the central monitoring and control system whenever they wish to hire or return a movable item, i.e. at the point in time at which they wish to remove the movable item from a securing device, or the time at which they wish to return the movable item to a securing device, thus terminating the hire. Although exclusive mobile telephone interaction is convenient from the point of view of the operating authority, and reduces overall cost, it is possible to operate the system using additional ways of communicating with the central monitoring and control system, for example via an online interactive session between a user's computer system and the central monitoring and control system, or via a normal speech conversation between the user and a real person operator, with the latter inputting data to the central monitoring and control system appropriately.

Systems according to the present invention may vary in complexity and may be configured to operate in a wide variety of ways, the particular way chosen being selected to be appropriate for the task in hand. In what follows, a specific description is provided of one particular application, viz. that of urban use bicycle hire, but it will be obvious to the reader of this specification that the system may generally be applied to a wide variety of other activities where a plurality of users need to have intermittent access to a plurality of movable items.

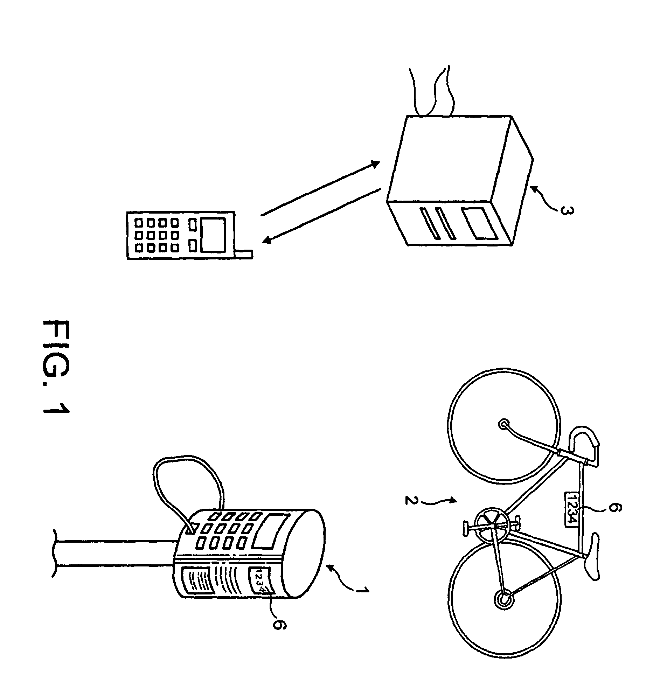

The accompanying drawing shows by way of illustration and diagrammatically a system in accordance with the invention. The particular system shown is for bicycle hire and the basic infrastructure consists of a plurality of locking stations 1 (of which only one is illustrated in the drawing) to each of which may be attached a bicycle 2. Each of the locking stations 1 and each of the bicycles 2 bears a visible unique identity number 6. The remainder of the system consists of an appropriately programmed computer 3 which is provided with input/output communications devices enabling data to be input into the computer and output data to be generated internally of the computer and output in appropriate format via an appropriate connection.

Also shown in the drawing and represented by their mobile phone 4 is a user.

A major advantage of the system in accordance with the invention is that it can be easily implemented by taking advantage of the fact that more and more people carry mobile telephones. Each mobile telephone in modern mobile telephone systems includes details relating uniquely and personally to the user of that telephone/the person who pays the bills to the telephone company. This usually takes the form of data encoded in a so-called subscriber identity module, which is often referred to simply by the term "SIM card". The "SIM card" itself is a relatively small plate-like component which needs to be inserted into a mobile telephone handset in order to make that handset work. The component contains, stored by an appropriate storage device, details of the owner of the SIM card. This is particularly important since SIM cards are interchangeable between different mobile telephone handsets, with the operating system of the mobile telephone company automatically ensuring that the billing is then made to the appropriate user, irrespective of whether the user was using the SIM card in "his" mobile telephone handset, or, e.g., had inserted it into a handset owned by someone else in order to make a call.

Thus, as shown in the drawing the user 4 is already provided with a unique identifying code by way of the encoded information stored in the SIM card.

The user 4 can communicate with the computer 3 by dialling an appropriate number, and the computer 3 can answer and provide an appropriate dialogue enabling the user to provide the necessary data to the computer and in return to generate the data which the user needs in order to carry out the release or return operation desired. The transmission is normally of simple numerical data and this may be achieved using appropriate programming via the use of the number keys on the mobile telephone unit and via its conventional small screen display. Alternatively, it is possible to use speech recognition techniques to determine numbers voiced by a user and speech synthesis techniques to transmit e.g. a release code to a listening user.

If the item-securing device, i.e. the locking station 1 is of the active type, the release code information does not necessarily need to be communicated to the user 4, but may be communicated directly to the active item-securing device/locking station 1.

One way in which the system illustrated in the accompanying drawing may be used is as follows:

The person wishing to hire a bicycle arrives at a bicycle locking station 1 to which a bicycle 2 is attached. The intended user then calls the number of the operating authority (which number can conveniently be visible on the locking station) and thus establishes communication with the computer 3. By way of screen or voice prompts (or both), the computer instructs the would-be user to enter the identity number of the bicycle and the identity number of the docking station. Both are thus transmitted to the computer which will then send back a code, again via speech or direct display on screen, to the mobile telephone handset. This code may be, for example, a simple four figure number. The user then inputs the four figure number to the locking device (which may be provided with a keypad for this purpose) and the bicycle is then released from the locking post and can be ridden away. When the user wishes to return the bicycle, he or she finds a vacant locking post, repeats the exercise of communicating with the computer (which will know perfectly well that the bicycle is not attached to a locking station 1) and the computer 3 then provides the relevant code number to enable the locking mechanism to be released and the bicycle then locked to the station 1. With an active locking station 1, the station itself may communicate to the computer 3 when this has been achieved. In the case of both communications between the user and the computer, the computer has automatically been able to take note of the identity of the user (or at least the identity of the SIM card that was in the phone at the time) and can accordingly then calculate the appropriate hire charge. The hire charge may, of course, be calculated in accordance with a preset programme which may, for example, have an appropriate tariff structure differentiating between periods of low and high usage and which may be structured to promote short-term use of the bicycle, e.g. by having an initial low fee per minute which, after a given amount of time, increases. The computer 3 may have associated billing software enabling, e.g. the generation of a monthly account which is sent to the user, preferably appropriately itemised, or, of course, the billing arrangements may be, if desired by the parties, taken care of via the mobile telephone company.

In the way of operating the system just described, the identity number of the bicycle and of the locking station both need to be input by the user. A more sophisticated system may be operated if the bicycle bears, instead of or in addition to the visible identity number 6 indicated on the drawing, a bicycle identification number stored in a tag which can be read when the bicycle is associated with the locking station. Such a tag may be incorporated into a flexible member permanently connected physically with the bicycle frame and having a free end which can be inserted into an appropriate receptacle at the locking station and which is configured to be locked in that receptacle until released. When inserted into the receptacle, it may latch in place and the locking station itself can then read, for example, an electronic serial number tag incorporated therein.

By using a suitable algorithm, the locking station may then construct a check number which can be displayed on the screen forming part of the locking station. If the locking station has a plurality of sockets into which such bicycle identification number-bearing tags may be inserted, a set of different check numbers may be generated, one corresponding to each then captive bicycle, the respective appropriate number for the bicycle being selectable, e.g. using a keypad on the locking station into which the user simply inputs the number adjacent the socket into which the bicycle he or she wishes to use has been "plugged".

When using such a system, the user merely takes their mobile phone and calls the central computer which can then carry out a quick check using the subscribed identity of the caller which, of course, is received at the same time as the call is made to check whether the caller is a known "account customer". If the caller is an existing account customer, the sequence of operation can proceed automatically; if not, the call may be diverted to a human operator. Assuming that the user is already registered, the computer then simply waits for the check number to be input by the user. The computer can derive from the check number the identity of the locking station and the identity of the bicycle, which two factors may then be transmitted to an appropriate billing system together with, e.g. date and time information to record the transaction of release of a bicycle which is taking place. It also enables the central computer to identify an appropriate release code, e.g. from a series of release codes which circulate slowly as the system is used, and that release code is then incorporated into a prepared text message transmission file which may then automatically be transmitted to the mobile phone in question. This occurs essentially immediately and the mobile phone user is then confronted by a text message which simply contains the release code together with a few appropriate words of instruction if desired, and on entering the release code into the keypad on the locking station, the bicycle is released.

The central computer is now aware that a particular user has a particular bicycle and there is a record of when that situation commenced so that, downstream, an appropriate charge may be levied.

Depending upon the operational rules governing the system, the computer may, for example, automatically after one hour, send out a prompt to the mobile phone in question if, by that time, the bicycle has not been returned to the same or a different locking station.

When the user has finished using the bicycle, he or she takes it to the nearest locking station, or the nearest one having an available receptacle into which the tag attached to the bicycle may be put, and inserts the tag into the receptacle. The locking station is programmed on such occurrence to generate from its own stored data as to its own identity and location and the bicycle identification number read from the tag or the like, and using the same algorithm as before, a new check number. That check number may be displayed on the locking station and the user who wishes then to terminate the hire merely calls the central computer using the mobile phone as before and, on an appropriate prompt, inputs the check number. The central computer works out from the check number which bicycle has been deposited at which locking station, and when the hire terminated. This last data is then processed internally of the central computer to enable the entire hire time to be recorded, a charge for that calculated, and the relevant details entered on to the customer's billing record.

Numerous other ways of operating the system in accordance with the invention may be devised.

A particular advantage of the system in accordance with the present invention is that it is not only capable of working on a basis of real time access, but rather is also capable of supporting a reservation system. Thus, if the identity of a given locking station 1 is known, a user may book a time at which he or she wishes to remove a bicycle from that station for use. From an appropriate time beforehand, the computer may, on receiving information that a bicycle has been attached to the particular station, prevent use of the station by any casual hirer and only transmit the appropriate unlocking code when the intended hirer makes contact.

It should particularly be noted that an unlocking code does not need to be communicated to a particular locking station each time a transaction is to be attempted. Each station may include means enabling it to be opened by a series of (originally randomly generated) four-figure codes which, for example, may be pre-programmed as a series of, say, 30 codes which are used sequentially, the central computer, of course, carrying a record of the 30 codes and keeping track of where, within that sequence, the particular station is "located", in other words, the central computer will always know the next code which will serve to unlock the particular locking station.

The system in accordance with the present invention is well placed to take advantage of increasing penetration of sophisticated functionality being introduced into mobile telephony. Thus, for example, it is conceivable that via appropriate infrared transmission/reception ports, the user's mobile telephone and the locking/unlocking mechanism in the securing device may communicate directly with one another using an appropriate protocol.

Security checks are essentially inherent in the system, including, for example, checking that the securing device identified by the mobile phone user is in the same mobile telephony cell, i.e. in roughly the same place, as the mobile telephone being used at the time. If, for some reason, there was a mismatch, access could be denied. Alternatively, the approximate location of the mobile telephone and (if associated with a hire at the time) possibly that of the item in question could be identified.

A particular advantage of the system is that because it may be realised using only simple number transmissions, it is essentially language independent. This may particularly be the case if communication with the mobile phone is via its screen and, for example, the user is prompted to input via the keyboard, bicycle and locking station identification numbers merely by a prompt on the screen consisting of an icon of a bicycle or locking station respectively followed by a question mark.

It should also be noted that, if desired, rather than using the relatively expensive mobile phone operation mode of "voice telephony", it is possible to use the "small messaging system" which is a feature of modern day mobile telecommunications systems. The user may compose a short message including the item and docking station identity codes in accordance with preset rules and the computer can respond by sending a short message giving the unlocking code.

Numerous variations may be made within the scope of the present invention which is easily matched to a variety of practical requirements where users need access to movable items, but only for a restricted period of time.

## Claims

1. A multiple access user system for providing intermittent availability to users of movable items, the system comprising:
- a plurality of spaced apart item-securing devices (1) each such device comprising a unique identifier (6) associated therewith,
- means to lock a normally movable item (2) physically to the item- securing device,
- means to release an item (2) locked to the item-securing device (1), and
- a central monitoring and control system (3) adapted to receive signals from a user (4) and, in dependence on the signals received, transmit data enabling a selected one of the item-securing devices (1) to be switched between the locked and unlocked conditions,
**characterised in that** the central monitoring and control system (3) is adapted to receive signals via a mobile telephone system from individual mobile telephone units located with each user and to transmit to the user, via the mobile telephone system, the data enabling the user to unlock the item.

2. A system according to Claim 1 wherein each item comprises a unique item identifier associated therewith.

3. A system according to Claim 1 or 2 wherein the spaced apart item-securing devices include means for communicating with the central monitoring and control system when an item is locked thereto or released therefrom.

4. A system according to any one of Claims 1 to 3 wherein the item-securing device includes means for entering a number into the device, for comparing the number with a number already stored in the device, and for unlocking an item attached thereto in the case of a match.

5. A system according to any one of the preceding Claims wherein each item comprises a tag including a unique identification number for the item and which is physically lockable into a receptacle on item-securing device.

6. A system according to any one of the preceding Claims wherein the items to be secured are bicycles.

## Patentansprüche

1. Benutzersystem für einen mehrfachen Zugang zur Bereitstellung einer intermittierenden Verfügbarkeit für Benutzer von beweglichen Objekten, wobei das System folgendes umfaßt:
- Eine Mehrzahl von im Abstand angeordneten Objektsicherungsvorrichtungen (1), wobei jede dieser Vorrichtungen eine ihr zugeordnete Kennzeichnung (6) aufweist,
- ein Mittel zum physikalischen Verriegeln eines normalerweise beweglichen Objekts (2) an der Objektsicherungsvorrichtung,
- ein Mittel zum Freigaben eines an der Objektsicherungsvorrichtung (1) verriegelten Objekts (2) und
- ein zentrales Überwachungs- und Steuerungssystem (3), das zum Empfang von Signalen von einem Benutzer (4) ausgebildet ist und in Abhängigkeit von den empfangenen Signalen Daten übermittelt, die es ermöglichen, daß eine ausgewählte Objektsicherungsvorrichtung (1) zwischen dem verriegelten und dem unverriegelten Zustand umgeschaltet wird,
**dadurch gekennzeichnet, daß** das zentrale Überwachungs-und Steuerungssystem (3) dazu ausgebildet ist, über ein Mobiltelefonsystem von individuellen Mobiltelefoneinheiten, die sich bei jedem Benutzer befinden, Signale zu empfangen und über das Mobiltelefonsystem Daten an den Benutzer zu übermitteln, die ihm das Entriegeln des Objekts ermöglichen.

2. System nach Anspruch 1, worin jedes Objekt eine ihm zugeordnete einzigartige Objektkennzeichnung aufweist.

3. System nach Anspruch 1 oder 2, worin die im Abstand angeordneten Objektsicherungsvorrichtungen ein Mittel zum Kommunizieren mit dem zentralen Beobachtungs- und Steuerungssystem aufweisen, wenn ein Objekt an der Objektsicherungsvorrichtung verriegelt oder davon freigegeben wird.

4. System nach einem der Ansprüche 1 bis 3, worin die Objektsicherungsvorrichtung ein Mittel zum Eingeben einer Nummer in die Vorrichtung aufweist, um die Nummer mit einer in der Vorrichtung bereits gespeicherten Nummer zu vergleichen und ein an der Objektsicherungsvorrichtung befestigtes Objekt im Fall der Übereinstimmung zu entriegeln.

5. System nach einem der vorstehenden Ansprüche, worin jedes Objekt einen Anhänger aufweist, der mit einer einzigartigen Identifizierungsnummer für das Objekt versehen ist und in einem Behälter an der Objektsicherungsvorrichtung physikalisch verriegelbar ist.

6. System nach einem der vorstehenden Ansprüche, worin die zu sichernden Objekte Fahrräder sind.

## Revendications

1. Système pour utilisateurs à accès multiple destiné à fournir une disponibilité intermittente à des utilisateurs d'articles mobiles, le système comprenant :
- une pluralité de dispositifs de fixation d'articles séparés (1), chaque tel dispositif comprenant un identificateur unique (6) associé à celui-ci,
- un moyen pour verrouiller physiquement un article normalement mobile (2) au dispositif de fixation d'article,
- un moyen pour libérer un article (2) verrouillé au dispositif de fixation d'article (1), et
- un système de surveillance et de commande central (3) conçu pour recevoir des signaux provenant d'un utilisateur (4) et, en fonction des signaux reçus, pour transmettre des données permettant à un dispositif sélectionné parmi les dispositifs de fixation d'articles (1) de basculer entre les états verrouillé et déverrouillé,
**caractérisé en ce que** le système de surveillance et de commande central (3) est conçu pour recevoir des signaux par l'intermédiaire d'un système de téléphonie mobile à partir d'unités téléphoniques mobiles individuelles situées avec chaque utilisateur et pour transmettre à l'utilisateur, par l'intermédiaire du système de téléphonie mobile, les données permettant à l'utilisateur de déverrouiller l'article.

2. Système selon la revendication 1, dans lequel chaque article comprend un identificateur d'article unique associé à celui-ci.

3. Système selon la revendication 1 ou 2, dans lequel les dispositifs de fixation d'articles séparés comprennent un moyen pour communiquer avec le système de surveillance et de commande central lorsqu'un article est verrouillé à un dispositif ou libéré de celui-ci.

4. Système selon l'une quelconque des revendications 1 à 3, dans lequel le dispositif de fixation d'article comprend un moyen destiné à entrer un numéro dans le dispositif, à comparer le numéro à un numéro déjà mémorisé dans le dispositif, et à déverrouiller un article fixé à celui-ci dans le cas d'une correspondance.

5. Système selon l'une quelconque des revendications précédentes, dans lequel chaque article comprend une étiquette comprenant un numéro d'identification unique pour l'article et lequel peut être physiquement verrouillé dans un logement sur le dispositif de fixation d'article.

6. Système selon l'une quelconque des revendications précédentes, dans lequel les articles à fixer sont des bicyclettes.
